# EUROPEAN PATENT APPLICATION

(11) **EP 2 253 651 A1**
(43) Date of publication of application: **24.11.2010**
(21) Application number: 10162662.0
(22) Date of filing: 12.05.2010
(51) Int. Cl.: C08G 18/08, C08K 9/10, C08J 9/00, A01N 25/16

(54) **Flexible foamed polyurethane with micro-balls containing silver ions or activated carbon and relative manufacturing method**

(30) Priority: 12.05.2009 IT MI20090812; 12.05.2009 IT MI20090813
(71) Applicant: Orsa Foam S.p.A., 21055 Gorla Minore (IT)
(72) Inventor: CIRANI, Andrea, 20025, LEGNANO (MILANO) (IT); ORNAGHI, Matteo, 20040, BURAGO DI MOLGORA (MONZA BRIANZA) (IT)
(74) Representative: Faggioni, Carlo Maria

(57) **Abstract**

A manufacturing process and a relative product based on flexible foamed polyurethane is described having improved properties, comprising the steps of delivering a mixture of polyurethane to be foamed in a mould or on a continuous manufacturing belt through a foaming head, wherein the polyurethane mixture is additioned with active charcoal and/or silver salt ions previously subjected to a microincapsulation process with a microincapsulation membrane frangible upon mechanical stress, said membrane being non-water-soluble and belonging to the group of proteins, polysaccharides, polyesters, polyacrylates, vinylic polymers, waxes or esters, so as to give microcapsules sized between 1 and 500 µm, and wherein the additioning step occurs with mass treatment, with the use of a pump, directly in the polyurethane mixing chamber, dosing a dispersion of microcapsules at 30-70% in a polyurethane-compatible carrier also comprising viscosity-reducing additives and deflocculants.

## Description

### Field of the Invention

The present invention concerns foamed polyurethane products, in particular adsorbent products and products having antimicrobial properties in the fields of mattresses and of corresponding pillows, of household and personal hygiene, of footwear, of sportswear and of air and water filtration.

### Background Art

As known, closed-cell or open-cell foamed polyurethane in the various densities available, is applied in a wide variety of fields.

Polyurethane chemistry is based on the reaction of isocyanates with molecules containing activated hydrogen atoms. The - NCO groups contained in the isocyanate molecule react quickly, in the presence of suitable catalysts, with:
hydrogen atoms bonded to atoms more electronegative than carbon (for example polyols), leading to the formation of the polymeric structure;
water, leading to the associated production of carbon dioxide and resulting expansion.

Typically, for the manufacture of finished objects of foamed polyurethane one can proceed both through mould injection and, more frequently, through a continuous block production process, with subsequent cutting of cylinders or blocks and then coupling, quilting or shaping processes.

As an example this last technology is briefly described. It provides to employ suitably sized storing tanks structured for the raw materials and the additives used, wherefrom the chemical components are taken and then moved, through circulation/dosing pumps, within dedicated connection lines, towards a mixing and delivery head. In the mixing head, consisting of a chamber whereto the injectors for the different dosing lines are connected and of a rotating rod, it is possible to vary different mixing parameters, such as the speed of the impeller or the pressure. The delivery head is at one end of a production line, typically consisting of a foaming tunnel with suction system. The tunnel base may be an inclined motorised belt (inclination of about 1-5 degrees, consisting for example of metal roller blinds) whereon the reaction mixture is poured as the belt runs below the delivery head;
alternatively, the tunnel base consists of a series of metal planes arranged in succession the inclination of which may be altered individually so as to draw different profiles of the plane where the reaction mixture is poured, followed by a motorised horizontal belt consisting of metal roller blinds.

Laterally, the tunnel has movable walls which may be inclined to vary the production width and the lateral profile, respectively. The side walls also consist of motorised metal roller blinds or of another sliding surface which follows the movement of the belt at the bottom of the tunnel so as to second the transportation of the polyurethane layer being manufactured. Both on the bottom and on the sides polythene papers or polyethylene films are arranged to contain the reaction mixture in the first steps of the process.

The height of the manufactured material may be adjusted according to the overall raw material capacity, of the belt speed and of the foaming width.

At the end of the foaming tunnel the material is cut into packs of varying length and arranged in maturing planes. At the end of the maturing period the material can be sent to warehouses or to processing departments (roll cutting, plates, short blocks, shaping).

The above outline remaining the same, different manufacturing technologies exist which impact mainly on the structure of the foaming line and on the mixing head.

In general the introduction of additional active agents, having singular chemical, physical or mechanical properties, in the manufacturing process of foamed polyurethane is extremely difficult. As a matter of fact, from a chemical point of view polyurethane formulation requires a skilful balance to be able to perform an even and regular polymerisation and expansion and hence supply an industrially acceptable product, according to the desired specifications. The physical and mechanical aspect of substances used in the process is of critical importance also because the handling of solid components provides:
- previous mixing with suitable liquid carriers;
- stabilisation of the relative dispersion thus obtained.

Within the scope of this context the solution of the invention has been developed. The Applicant has set itself the task of manufacture a foamed polyurethane, through an industrially economic and effective process, suited to the subsequent manufacture of mattresses and pillows, as well as other products for personal use, having improved and innovative features. In particular, it intended to devise a process and relative product based on foamed polyurethane which allowed to achieve the following objects:
- development of a polyurethane foam with high adsorbing features;
- development of a polyurethane foam with total antibacterial protection, without the use of substances which are harmful to man and the environment;
- development of a technology which allowed to exhibit the above cited features for a prolonged period of time and in a modulated manner;
- development of a technology which allowed to maximise yield and hence the action of the active substances introduced in the polyurethane foam.

For the achievement of the objects set forth above the following issues have bean dealt with. It was planned to use excellent active substances for the finished product, but which can substantially change the reaction profile, the manufacturing process and the physical-mechanical features of foamed polyurethanes. Moreover, it was planned to preserve the activity of the active substances during the manufacturing and processing steps of foamed polyurethane, as well as to modulate the release of the same active substances during the use of foamed polyurethanes, so as to make them perfectly effective in the finished product. It was also necessary to deal solid additives in the manufacturing process of foamed polyurethane, developing dispersions in a suitable carrier with a viscosity and a stability compatible with the manufacturing process of foamed polyurethane, without impairing the homogeneity of the final material.

In the wide diversification of obtainable products, the Applicant has focussed its research on a flexible foamed polyurethane which has good antimicrobial, filtering properties, as well as a good adsorption of undesired substances, particularly suited to the manufacture of a final product for personal use which requires a high level of hygiene (such as a mattress) to avoid the development of harmful bacteria and odour.

For such purpose, the use is already known, precisely in the formulation of polyurethane, of liquid substances or dispersions of anti-mould and bacteriostatic solids, the effectiveness of which, however, quickly depletes, also in the light of tolerance, environmental compatibility and productive process issues. As a matter of fact, precisely with reference to these last aspects, very often the additives used up until today are based on tin salts or contain chlorinated substances, which very often may comprise:
contraindications from a point of view of compatibility with the human body (for example irritative, harmful or toxic substances) and with the environment (for example harmful substances for the water environments);
contraindications from a point of view of the productive process, because they cause changes in the productive parameters, sometimes not fully solvable even applying formula adjustments.

Moreover, from a point of view of the protection from microorganism proliferation, for many fields which employ polyurethane, the additions currently possible, with bacteriostatic and fungostatic action, however, have a limited spectrum of action.

From another point of view, the excellent antimicrobial properties and anti-odour properties of silver ions are known, as well as their full compatibility with the human body given their wide use in the medical field (drugs, medication) and in the personal hygiene field.

However, silver ions are hardly suited to be inserted in a formulation of flexible polyurethane because:
they would contaminate the composition thereof, severely changing its reaction profile (catalysis action) with consequent impact on the features of the finished product;
they would immediately lose their properties of antibacterial agent.

The porosity properties of active charcoal are also known, with similar aims, suited to filter and adsorb pollutants or substances which may be the direct or indirect cause of odour as a consequence of decomposition operated by microorganisms. Although the three-dimensional cellular structure of flexible foamed polyurethane already imparts good features as a material for mechanical filtering, the addition of active charcoal leads to hugely increase the spectrum of filtering action, expanding it to a series of molecules/substances difficult to capture through the cellular structure alone.

Such action is exhibited through the presence of a microporous surface structure which increases to a very large degree the useful adsorbing surface, the volume/weight being the same.

However, active charcoal can hardly be inserted in a formulation of flexible polyurethane because:
it would contaminate the composition thereof, severely changing process parameters with a resulting impact on the features of the finished product;
   - it would immediately lose its properties (its microporosity would be concealed by the polymeric material).

Finally, it is already known to microincapsulate active agents to be able to introduce them in the foamed polyurethane without influencing the polymerisation and foaming process of polyurethane. See for example US 4828542.

However, it has been detected that this known process of use of microcapsules is not particularly effective, especially in association with agents such as silver salts and active charcoal. As a matter of fact, no good homogeneity and mixing stabilisation can be obtained in polyurethane, before the subsequent foaming. Moreover, it is not possible to properly control the position and the adhesion of the microcapsules compared to the cellular structure of polyurethane, thus ending up also influencing in an uncontrolled way the mechanical, chemical and physical features of polyurethane. There results that agents such as silver ions and active charcoal are not suitably exposed in the finished product, such as a mattress or other object for personal use, impairing the effectiveness of the principles, unless high concentrations are resorted to, which are not welcome for personal use products and which, in any case, negatively affect manufacturing costs.

The object of the present invention is hence that of providing a manufacturing process of foamed polyurethane and relative finished product suitable for personal use, which is particularly suited to the inclusion of silver salts and active charcoal, overcoming known art drawbacks.

Moreover, it is intended to provide a finished product wherein the effectiveness of silver ions or of active charcoal can be suitably controlled and hence modulated in time.

### Summary of the Invention

Such object is achieved through a process and a product as described in their essential features in the enclosed main claims.

In particular, according to a first aspect of the invention, a manufacturing process is provided of a product based on flexible foamed polyurethane having improved properties, comprising the steps of delivering a mixture of polyurethane to be foamed in a mould or on a continuous manufacturing belt through a foaming head, wherein
the polyurethane mixture is additioned with active charcoal and/or silver salts previously subjected to a microincapsulation process with a microincapsulation membrane frangible upon mechanical stress, said membrane being insoluble in water and belonging to the group of proteins, polysaccharides, polyesters, polyacrylates, vinylic polymers, waxes or esters, so as to give microcapsules sized between 1 and 500 µm, and wherein
the additioning step occurs with a mass treatment, with the use of a pump, directly in the polyurethane mixing chamber, dosing a dispersion of microcapsules at 30-70% in a polyurethane-compatible carrier comprising also viscosity-reducing additives, wetting agents and deflocculants in amounts in any case below 5% on the dispersion mass.

According to a preferred aspect, the microcapsules obtained in said microincapsulation process comprise about 3-5% by weight of inert material, about 17-25% by weight of membrane and about 70-80% of active charcoal or silver salt ions. Microincapsulation is preferably carried out in suspension in water. According to a preferred opportunity of the invention, microincapsulation occurs by previously dispersing active charcoal or silver salt ions in a further carrier insoluble in water.

According to preferred aspects of the invention, microincapsulated active charcoal is found in foamed polyurethane in an amount between 0.5% and 15% by weight on the finished weight of the foam, while the microincapsulated silver salt ions are found in the foamed polyurethane in quantities between 0.05% and 5% by weight on the finished weight of the foam.

According to a further aspect of the invention, a cleaning product, a filling for garments or footwear, a mattress and a bed pillow are provided, which consist of foamed polyurethane additioned according to a process as detailed above.

Further features and advantages of the process and of the product according to the invention will in any case be more evident from the following detailed description of some preferred embodiments, given by way of example and with reference to the enclosed pictures, which shows a photograph at the electronic microscope (with enlargement factor 200X) of microcapsules inserted in the polymeric matrix according to the invention.

### Detailed description of the Preferred Embodiment

In the following of the description reference will be made to an exemplifying process for the manufacture of foamed polyurethane. It is understood that the semi-finished product, with which it is possible to assemble a mattress, a pillow or other personal use item, is achievable both with a continuous technology and by moulding (in suitable moulds for already shaped individual products).

As shown in the premises, in the final product it is aimed to be able to have a polyurethane matrix wherein materials are included (specifically silver ions or active charcoal) having antibacterial and adsorbing properties from a chemical-physical point of view, compared to substances present both in the liquid and in the gaseous phase. According to the invention, such inclusion is achieved by means of a specific microincapsulation technique.

In substance, the antibacterial or adsorbent material, i.e. silver ions or active charcoal, in granular form or in powder (both high purity, with a reduced content of impurities, in particular of metals, and low acidity), is suitably microincapsulated - as shown in the following - before being introduced in the desired polyurethane formulation.

The technology called "microincapsulation" allows to contain inside a "shell" an active substance/additive and to protect it from external agents. The microcapsules may vary in size between 3 and 800 µm.

The active material is microincapsulated in order to modulate and control the release thereof, keep active the features thereof, protecting it from external agents and avoiding negative interactions of the same during the manufacturing process of foamed polyurethane.

Specifically, silver ions or active charcoal, in the form of powder with an average diameter of particles between 1 and 100 µm, are microincapsulated with an outer membrane insoluble in water.

This process allows to protect silver ions or the microporous surface structure of active charcoal, preserving the activity thereof intact during the phases of dispersion and of subsequent use in the manufacturing process of flexible foamed polyurethane.

Microincapsulation protects the active substance also during the manufacture of foamed polyurethane in the mixing phase of the raw materials.

Microincapsulation hence allows
- to correctly perform the chemical reactions involved in the manufacture of flexible foamed polyurethane, without negative interactions due to the presence of the active substances (active charcoals, silver ions);
- to preserve intact the activity of the active substance during the steps of dispersion and of subsequent use in the manufacturing process of flexible foamed polyurethane; and
- to modulate and protract the activity of the active substance in the finished product during the use thereof.

According to an essential and original feature of the invention, the membrane composition, the thickness thereof and the size of the microcapsule are defined to make available the contents due to rupture, following mechanical stress imparted on the finished product during use.

Accordingly, the membrane typically consists of one of the substances belonging to the group of proteins, polysaccharides, polyesters, polyacrylates, vinylic polymers or waxes.

The average size of such microcapsules ranges between 1 and 500 µm.

Moreover, microincapsulation may be obtained by both dispersing the active substance (silver ions or active charcoal) in a non-water-soluble substance (first carrier) and then enclosing such suspension into the membrane, and enclosing in the membrane the active substance only. In this latter case, despite having to endure greater process complications, the active substance concentration inside the microcapsule is remarkably increased.

When it is preferred to obtain a suspension to enclose in the membrane, the suspension carrier is preferably a triglyceride.

The entire manufacturing process of the microcapsules is carried out in an aqueous suspension. At the end, the water is removed and the microcapsules are brought into the dry phase, introducing an inert substance, such as silicon dioxide, which avoids the aggregation of the microcapsules to each other. The inert substance is understood as such in connection with polyurethane, i.e. it is chosen so as not to interfere with the subsequent manufacturing process of foamed polyurethane.

The microincapsulation product has the appearance of powder and, in case the first non-water-soluble carrier is not provided, it has the following average composition by weight: about 3-5% of inert material, about 17-25% of membrane, about 70-80% of active substance.

As such, the solid powder of microcapsules would not be usable in a traditional polyurethane delivery and foaming process, because it is not transferrable through the dosing pumps, which are suitable to move liquids with a certain (low) viscosity only.

According to the invention, this material hence undergoes a dispersion process with the technique of the disperser in a carrier compatible with the reaction of polyurethane formation. Sphere or cylinder dispersion techniques are not used to minimise mechanical stress on the microspheres.

The second dispersion carrier may be both reactive, i.e. such as to remain chemically bound in the polymer matrix, and non-reactive. In the first assumption, the presence of it must then be considered during the polyurethane formulation calculation, in the second assumption a substance must instead be chosen which does not impair the observance of the main sector standards concerning the environment, health and safety, in the light of the fields of use of the finished product, therefore avoiding phthalate-based substances. The second carrier finally must be chemically compatible with the microsphere membrane. Should a reactive carrier be used, it is preferably a polyol (polyether or low-viscosity polyester), in case instead of a non-reactive carrier, it is preferably a plasticiser, preferably a non-phthalic one.

The dispersion concentration must preferably be such as to contain between 30 and 70% of microspheres on the total.

In addition to the second carrier, because it is necessary to maintain a good dispersion homogeneity and stabilisation (which would otherwise tend to separate in the storing tanks) but also low viscosities (for a good operation of dosing pumps) as well as the maximum possible concentration of microspheres (to affect as little as possible the finished product with extraneous substances, such as the second carrier), according to the invention visco-depressants (i.e. viscosity-reducing agents) are furthermore introduced in an amount between 0.1% and 5% on the dispersion mass, wetting agents of a various chemical nature and deflocculants (such as silicates) in an amount between 0.05% and 1% on the dispersion mass.

The dispersion thus obtained is introduced in the mixture wherefrom flexible foamed polyurethane is then obtained. Such polyurethane material can be obtained through the use of various technologies, well-known per se, for the manufacture of flexible foamed polyurethane both in blocks and continuous, and by moulding.

The densities of polyurethanes vary between 18 and 140 kg/m³; isocyanates used may be TDI (toluene diisocyanate), MDI (methylene diphenyl isocyanate) e IPDI (isophorone diisocyanate); the nature of the polyol can be both ether and ester. Polyether polyols are typically based on ethylene and/or propylene oxide with molecular weights ranging between 400 and 12000 and di-tri-tetra-penta or hexa functional starters. Polyester polyols are typically saturated based on adipic acid and diethylene glycole with branching agents such as glycerine, trimethylol propane or penta erythrit.

The weight percentages of the special additioning according to the invention (microincapsulated active substance of the first non-water-soluble carrier on the finished weight of the foam) may vary, depending on density and/or polyurethane final use, from 0.05% to 5% by weight for the microcapsules of silver salts and between 0.5% and 15% by weight for microcapsules of active charcoals.

The additive dispersion is joined to the polyurethane mixture through a mass treatment, i.e. with the use of a piston pump, gear pump or peristaltic pump for the dosing of the dispersion directly in the polyurethane mixing chamber.

The continuous/discontinuous foaming or the moulding of additioned polyurethane occur in a traditional manner, allowing to use the installation normally employed for the normal productions of polyurethane, except for the devices mentioned in the present invention due to the management and use of microspheres.

The activation of silver ions or of the microincapsulated active charcoals occurs subsequently, through mechanical stress applied to the finished product, so as to break the microcapsule membrane. In the majority of provided uses, such mechanical action occurs directly during use, furthermore leading to a modulation of the activity over time which extends the effectiveness thereof (for example in mattresses, pillows, sponges for personal and household hygiene, in insoles, in padding for cycling shorts and so on). In the cases in which no natural mechanical stress is provided during use (for example in the water and air filtering application), it is sufficient to activate the product by manual squashing before installation.

The above described process allows to achieve the desired results, since it joins individual contributions which overall optimise process reactions in a synergistic way. In particular, the process occurs in the desired way due to the contributions of:
the identification of silver ions and active charcoals which have high activity and a physical shape (for example average distribution of particles) suitable for the microincapsulation process and the manufacturing process of flexible foamed polyurethane;
the mass treatment in the additioning (mixing) of microcapsules;
the use of microincapsulation technology;
the development of microcapsules with a shell suited to withstand the reaction environment typical of a manufacturing process of foamed polyurethane, be it from a continuous block, discontinuous block or by moulding;
the development of microcapsules with a shell suited to release the active substance, once they have been embedded in the polymer matrix, by mechanical stress typical of use;
the development of microcapsules with a high content active substance through a suspension in a suitable active substance carrier and microincapsulation or microincapsulation of the sole solid active substance;
the development of dispersions of microcapsules compatible with the manufacturing process of foamed polyurethane, through the use of specific reactive or non-reactive carriers;
the development of dispersions with high concentrations in microcapsules but reduced viscosity, through the use of wetting agents and viscosity-reducing additives (visco-depressants);
the development of microcapsule dispersions stable over time, to avoid microcapsule sedimentation or floating phenomena, through the use of deflocculants.

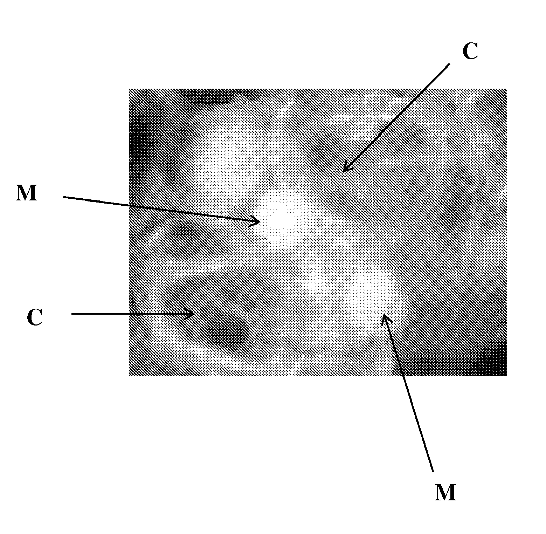

All these features allow to obtain a product having the desired excellent features, with a full control of the size and position of the microcapsules within the polymer matrix. As an example, in the enclosed drawing it can be detected how the microcapsules end up being arranged compared to the cellular structure of the polymer matrix. The distribution is even and sufficiently perimetric with respect to the cells, so as to make the activation of the microcapsules effective due to mechanical stress.

The fields of employment of the materials which can be obtained by the process described in the present description are various. Here in the following some original uses of polyurethane additioned according to the invention are described, which allow to define innovative products never before available on the market.

### Mattress and Bed Pillow

The conditions of use in such fields provide environments particularly suited for the development of microrganisms, especially due to the high humidity rate and to mild temperatures. This may also lead to the formation of odours.

In order to minimise the arising of such situations, simple maintenance operations are usually recommended, especially for mattresses. Many times such devices are not adopted or prove not to be sufficient: in these cases, the use of a mattress or a pillow obtained with the process of the invention eliminates any problem connected to the presence of microorganisms, maintaining the protection of the polymer matrix over time due to the gradual release, without introducing in the polyurethane materials substances which can in some way be a problem for the users' health.

The types of product mainly used are:
ether-based conventional flexible foamed polyurethanes;
ether-based high-resilience, flexible foamed polyurethanes;

For all these types of product a classic fire-resistance treatment is also applicable - depending on the requirements of the specific field of use - which do not negatively interfere with the formulation of the invention.

### Household and personal hygiene

Up until today the products (sponges, cloths, ...) used in these fields were not additioned or could count only on bacteriostatic and fungostatic treatments. The conditions of use provide environments particularly suitable for the development of microrganisms due to the high humidity, mild temperatures and presence of nutrients.

In this case the action of microincapsulated silver ions is exploited to eliminate the bacteria on the humid product impregnated with organic residues. The full biocompatibility of silver and the inert nature of the microcapsule structure makes such treatment particularly suited for the specific use, extending the life of the finished product due to microincapsulation, furthermore ensuring a high level of hygiene.

The adsorbent action of microincapsulated active charcoals is exploited to reduce the development of odours on the wet product impregnated with organic residues. The active charcoal acts as adsorbent, reducing the substances prone to the action by microorganisms.

The association of the treatment with microincapsulated active charcoals and microincapsulated silver ions according to the present invention leads to an optimal synergy of action.

The mainly used types of products are:
ether-based and ester-based conventional flexible foamed polyurethanes;
ether-based and ester-based "sea sponge" flexible foamed polyurethanes.

### Sports Footwear

Up until today the products (insole and the like) used in these fields are generally not additioned, very rarely do they exhibit bacteriostatic and fungostatic surface treatments. However, the conditions of use, especially for the insole, provide environments particularly suitable to the development of odours and of microorganisms due to the high humidity, mild temperatures and presence of perspiration.

In this case the adsorbent action of active charcoals is exploited to reduce the development of odours. Active charcoal acts as an adsorbent reducing the substances prone to the action by microorganisms.

The action of silver ions, according to the present invention, allows to avoid the development of microorganisms which then lead to the degradation of substances hence causing the formation of odours. The solution offered in the present invention furthermore allows to remarkably extend the activity of the active substances noticeably extending the periods of use of the finished product.

The association of the treatment with microincapsulated active charcoals and microincapsulated silver ions according to the present invention leads to an optimal synergy of action.

The types of products mainly used are high-density, ether-based, conventional, flexible foamed polyurethanes.

### Sportswear

Up until today the products (fillings, shorts padding, absorbing bands) used in these fields are generally not additioned, very rarely do they have bacteriostatic and fungostatic surface treatments. However, the use provides the formation of conditions particularly suitable for the development of microorganisms due to the high humidity rate, mild temperatures and presence of perspiration.

In this case the adsorbent action of active charcoals is exploited to reduce the development of odours. The active charcoal acts as adsorbent, reducing the substances prone to the action by the microorganisms.

The action of silver ions allows to avoid the development of microorganisms which then lead to the degradation of substances hence causing the formation of odours.

The solution offered in the present invention furthermore allows to noticeably extend the activity of the active substances remarkably extending the periods of use of the finished product.

The association of the treatment with microincapsulated active charcoals and microincapsulated silver ions according to the present invention leads to an optimal synergy of action.

The types of products mainly used are various-density, ether-based and ester-based conventional, flexible foamed polyurethanes.

### Air and Water Filtering

The materials used in these fields undergo the crosslinking post-treatment, so as to obtain a particularly open cellular structure; no additioning is normally provided.

Especially for the use in acquariology it is often necessary to introduce the active charcoal separately to reduce the load of pollutants (for example after treatment with drugs) found in water.

A product based on foamed polyurethane according to the present invention in this field allows to obtain a twofold filtering action, mechanical and chemical simultaneously.

The types of product mainly used are ether-based and ester-based conventional flexible foamed polyurethanes.

However, it is understood that the invention is not limited to the particular configurations illustrated above, which are only non-limiting examples of the scope of the invention, but that a number of variants are possible, all within the reach of a person skilled in the field, without departing from the scope of the invention as defined by the attached claims.

## Claims

1. Manufacturing process of a product based on flexible foamed polyurethane having improved properties, comprising the steps of delivering a mixture of polyurethane to be foamed in a mould or on a continuous manufacturing belt through a foaming head, **characterised in that**
said polyurethane mixture is additioned with active charcoal and/or silver salt ions previously subjected to a microincapsulation process with a microincapsulation membrane frangible upon mechanical stress, said membrane being non-water-soluble and belonging to the group of proteins, polysaccharides, polyesters, polyacrylates, vinylic polymers, waxes or esters, so as to give microcapsules sized between 1 and 500 µm, and wherein
said additioning step occurs by mass treatment, with the use of a pump, directly in the polyurethane mixing chamber, dosing a dispersion of microcapsules at 30-70% in a polyurethane-compatible carrier also comprising viscosity-reducing additives, wetting agents and deflocculants in quantities below 5% on the dispersion mass.

2. Process as claimed in claim 1), wherein the microcapsules obtained in said microincapsulation process comprise about 3-5% by weight of inert material, about 17-25% by weight of membrane and abut 70-80% of active charcoal or silver salt ions.

3. Process as claimed in claim 1) or 2), wherein said microincapsulation is carried out in water suspension.

4. Process as claimed in claim 3), wherein said microincapsulation occurs by previously dispersing active charcoal or silver salt ions in a further non-water-soluble carrier.

5. Process as claimed in any one of the preceding claims, wherein said compatible carrier is reactive with said polyurethane and it is a polyol.

6. Process as claimed in any one of the preceding claims, wherein said compatible carrier is non-reactive with said polyurethane and is a plasticiser.

7. Process as claimed in any one of the preceding claims, wherein said microincapsulated active charcoal is present in the foamed polyurethane in an amount ranging between 0.5% and 15% by weight on the finished weight of the foam.

8. Process as claimed in any one of the preceding claims, wherein said microincapsulated silver salt ions are present in the foamed polyurethane in an amount ranging between 0.05% and 5% by weight on the finished weight of the foam.

9. Cleaning product, **characterised in that** it consists of foamed polyurethane additioned according to a process as claimed in any one of claims 1) to 8).

10. Filling for garments or footwear, **characterised in that** it consists of foamed polyurethane additioned according to a process as claimed in any one of claims 1) to 8).

11. Mattress or bed pillow, **characterised in that** it consists of foamed polyurethane additioned according to a process as claimed in any one of claims 1) to 8).
